# EUROPEAN PATENT SPECIFICATION

(11) **EP 1 537 546 B1**
(45) Date of publication and mention of the grant of the patent: **27.09.2006**
(21) Application number: 03766576.7
(22) Date of filing: 17.07.2003
(51) Int. Cl.: G08B 13/12

(54) **A PORTABLE DEVICE FOR CONNECTION TO THE PERSON**
TRAGBARES GERÄT ZUR VERBINDUNG MIT DER PERSON
DISPOSITIF PORTATIF SE CONNECTANT A LA PERSONNE

(30) Priority: 30.07.2002 GB 0217572; 13.08.2002 US 403120 P
(43) Date of publication of application: 08.06.2005
(73) Proprietor: Nokia Corporation, 02150 Espoo (FI)
(72) Inventor: DAVIDSON, Brian, Woking, Surrey GU21 3QD (GB)
(74) Representative: Swindell & Pearson
(86) International application number: PCT/IB2003/003432
(87) International publication number: WO 2004/013822

(56) References cited:
- WO-A2-03/048907
- DE-U1- 20 112 099
- FR-A1- 2 830 108
- US-A- 6 151 493

## Description

### FIELD OF THE INVENTION

The present invention relates to portable devices for connection to the person. In particular, it seeks to reduce the desirability of such devices to thieves.

### BACKGROUND TO THE INVENTION

The portable nature of mobile phones mean that they are easily misplaced and stolen. It would be desirable to make a telephone less desirable to a thief and, in particular, less likely to be stolen if misplaced or left behind.

A current trend in the mobile telephone industry, is the miniaturisation of telephones. Another trend is that mobile telephones are becoming fashion accessories and are often visibly wom on or about the person. For example, mobile telephones may be hung around the neck, around the wrist or attached to a belt or clothing. One problem with wearing telephones in this way is that they can be grabbed by a thief.

It would be desirable to reduce the likelihood of such a theft taking place and also to reduce the risk of personal injury during such a theft.

US 6,151,493 (Saskura) discloses a use prohibition system which can disable a cellular phone or any other device if it separates more than a predetermined distance from the user. It includes an identification signal transmission unit and a use prohibition mode cancelling unit attached or mounted to the cellular phone. If the transmission unit is separated more than a predetermined distance from the cellular phone, the cellular phone is disabled and the transmission unit sounds an alarm.

### BRIEF SUMMARY OF THE INVENTION

According to one aspect of the invention there is provided a portable device, comprising: a releasable connector arranged to connect the portable device to a person and arranged to release the connection of the portable device to the person if the device is grabbed while connected to the person; and control means arranged to effect at least partial disablement of the device in response to the release of the releasable connector.

The partial disablement of the device results in the device not being capable of normal use but only being capable of restricted use or no use.

The releasable connector may be anything which allows the device to be worn by a person, for example, a neck strap, a wrist strap or a clip. With a neck strap the portable device is connected to a person by being supported around their neck. With a wrist strap the portable device is connected to a person by being attached to their wrist. With a clip the portable device is connected to a person by being attached to their clothing or accessories. The releasable attachment releases the connection by breaking, coming apart or otherwise losing the connection.

The portable device may comprise a sensor for sensing the release of the connector. The sensor may sense a change in electrical characteristics of the connector such as its resistance.

The portable device may be a mobile cellular telephone in which the radio transmitter is the transmitting portion of the telephone's radio transceiver. The partial disablement of the telephone results in the telephone not being capable of normal use. For example, the telephone may be capable of making only emergency calls and incapable of receiving calls (restricted use) or incapable of making and receiving any calls (no use). The partial disablement of the mobile cellular device may allow the device to make calls to a network operator call centre and/or re-direct restricted calls to/from the device to a network operator call centre.

Preferably, the portable device can be re-enabled following authentication e.g. by the user calling the network operator call centre, possibly using the partially disabled mobile cellular device, and providing password authentication.

The portable device is preferably arranged to allow the operation of the releasable connector to be activated/deactivated. In the activated state, the control means is able to effect at least partial disablement of the device in response to the release of the releasable connector.

The control means is preferably arranged to control the radio transmitter to send a message in response to the release of the releasable connector.

In an embodiment where the device is or comprises a cellular mobile telephone for operation in a cellular communications network, the control means may be arranged to effect at least partial disablement of the device by controlling the radio transmitter to send a disabling message to the network for disabling normal operation of the telephone in the network. The mobile telephone may comprise a handset and a replaceable card, which enables the handset to operate as a telephone in the network, and the network may be responsive to the disabling message sent by the mobile telephone to disable the card from normal use in the network and/or to disable the handset from normal use in the network.

The disablement of the card will preferably involve an adaptation to one or more databases used in the network for controlling user access to the network. The disablement of the card may completely prevent the card from enabling the normal operation of any handset as a telephone in the network.

The disablement of the handset will preferably involve an adaptation to one or more databases used in the network for controlling equipment access to the network. The handset, even when disabled, may still be capable of making emergency calls e.g. to 911 (USA) or 999 (GB).

In an embodiment where the device is or comprises a cellular mobile telephone for operation in a cellular communications network and the telephone comprises a handset and a replaceable card, which enables the handset to operate as a telephone in the network, the control means may be arranged to effect at least partial disablement of the device by locking the handset to the card, in response to the release of the releasable connector, so that it can be used normally as a telephone only in conjunction with the card present in the handset when the telephone is grabbed. If a different card is used with the handset after locking, the telephone may still be capable of making emergency calls e.g. to 911, but will not be capable of placing calls to user determined telephone numbers. Preferably, the control means, in response to the release of the releasable connector, is additionally arranged to send a disabling message to the network for disabling the card. The disablement of the card may completely prevent the card from enabling the normal operation of any handset as a telephone in the network.

### BRIEF DESCRIPTION OF THE DRAWINGS

For a better understanding of the present invention reference will now be made by way of example only to the accompanying drawings, in which:
Fig. 1 is a schematic illustration of the functional components of a GSM mobile telephone embodiment of the present invention;
Fig. 2 illustrates the exterior of the GSM telephone embodiment; and
Fig. 3 illustrates a GSM cellular communications network embodiment.

### DETAILED DESCRIPTION OF EMBODIMENT(S) OF THE INVENTION

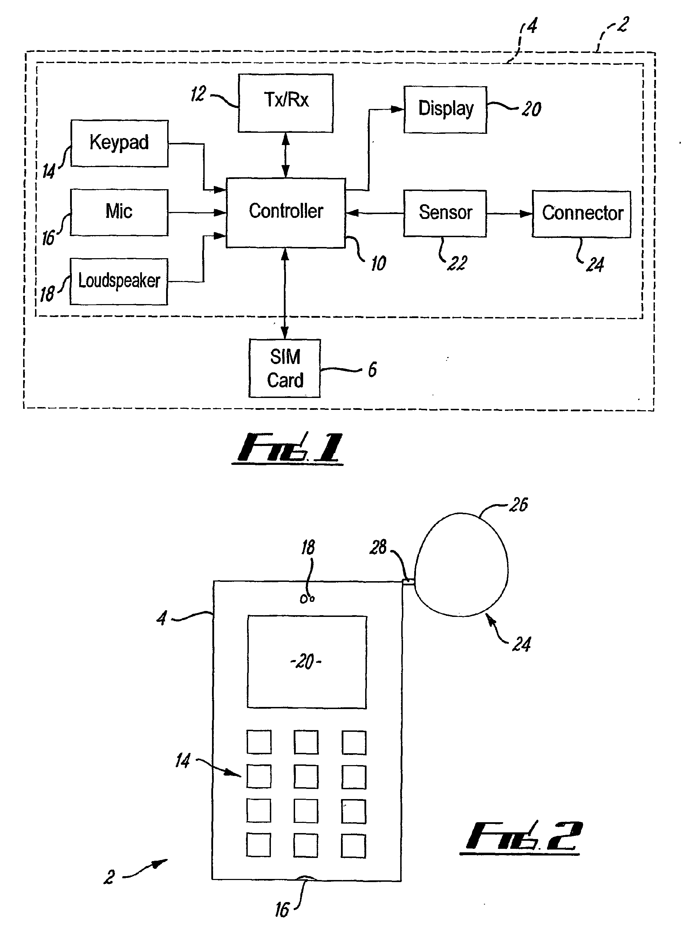

Fig. 1 is a schematic illustration of the functional components of cellular mobile telephone 2 for operation in a cellular communications network, which in this example is a GSM network. The telephone 2 comprises a handset 4 and a SIM card 6. The handset 4 comprises a controller 10, radio transceiver circuitry 12 electrically connected to the controller 10, a user input keypad 14 electrically connected to the controller 10, a user input microphone 16 electrically connected to the controller 10, a loud speaker 18, for audio output to the user, electrically connected to the controller 10, and a display 20 electrically connected to the controller 10. These components are standard components of a GSM mobile telephone handset. The person skilled in the art will readily understand how they inter-operate to send and receive messages such as SMS messages and to make and receive telephone calls. The handset 4, further comprises, a sensor 22 electrically connected to the controller 10 and a connector 24 connected to the sensor 22.

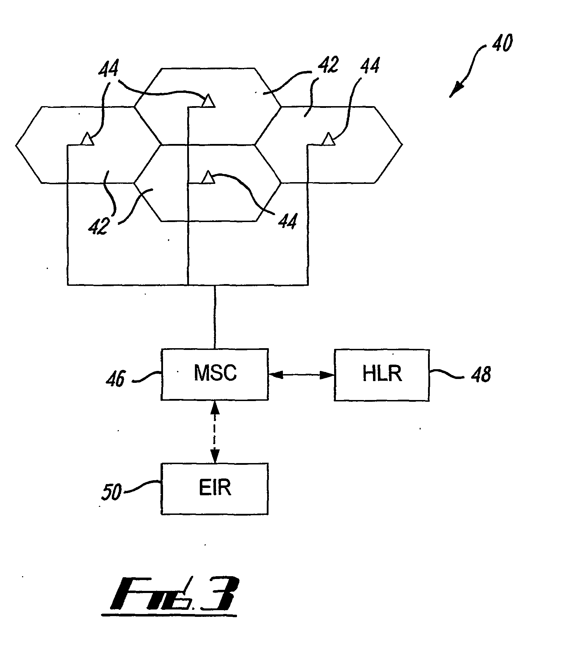

Fig. 2 schematically illustrates the exterior of the handset 4. In this embodiment, the connector 24 comprises a strap 26 and a couple 28. The strap 26 is connected to the body of the handset 4 via the couple 28. The strap 26 may be suitable for being passed over the head of a user so that the handset 4 hangs from the neck or it may be suitable for being passed over the hand and tightened around the wrist so that the handset 4 hangs from the wrist. Although a strap 26 is illustrated in this figure, it should be appreciated that different connectors 24 could be used. For example, the connector 24 could in an alternative embodiment be a clip for attaching the handset 4 to a belt or to clothing.

The connector 24 which connects the telephone to a person is designed so that it will release the connection when the telephone 2, attached to a person, is grabbed by a thief. For example, in the embodiment of Fig. 2 the strap 26 may have an inherent weakness so that when the telephone 2 is grabbed the strap breaks. Alternatively, the couple 28 may be designed to sever the connection between the strap 26 and the telephone 2 when the telephone is grabbed by a thief. The sensor 22, illustrated in Fig. 1, is arranged to sense when the telephone 2, which is attached to a person, has been grabbed by a thief. This is preferably done by sensing when the connector 24 ceases to connect the telephone 2 to the person. This may be achieved by, for example, forming a closed conductive path from the telephone 2 through the couple 28 and around the strap 26 to return to the telephone 2 while the telephone 2 is attached to the person. The severance of this closed conductive path, when the connector releases its connection, is easily detectable using known techniques such as by periodically testing the conductive path for changes in resistance.

Alternatively, in an embodiment of the invention not claimed in this application, the sensor 22 may not be physically connected to the connector 24. Instead, the sensor 22 comprises a low power radio transceiver or infrared transmitter for communicating with a counterpart device carried by the person. The low power radio transceiver in the sensor 22 may for example communicate with a low power radio transceiver in the wrist watch of the user of the phone. When the link between the telephone 2 and the counterpart device is broken because the telephone and counterpart device have been separated the sensor 22 is activated. The sensor 22 is therefore acting as a proximity detector and is activated when the telephone 2 and the counterpart device are separated beyond the threshold distance. A separation beyond the threshold distance would occur, for example, if the telephone 2 were stolen by a thief or inadvertently left behind. In this alternative embodiment, the activation of the sensor causes the controller 10 to at least partially disable the telephone 2. This may occur, for example, by the radio transceiver 12 of the mobile telephone transmitting a disable message and/or, by the locking of the SIM card 6 to the handset 4. As a variation, to this alternative embodiment the sensor 22 may be positioned in the counterpart as opposed to the telephone 2. The controller 10 is connected to a low power radio frequency transceiver which communicates with a low power radio frequency transceiver connected to the sensor 22 in the counterpart. The sensor 22 operates as a proximity detector, detecting when the separation between the counterpart and the telephone exceeds a threshold. This may be done by, for example, measuring the attenuation of a signal. When the separation exceeds the threshold, the sensor 22 in the counterpart is activated and sends a command to the controller 10 which causes the at least partial disablement of the mobile telephone 2.

In response to the activation of the sensor 22 the controller 10 when in an active mode effects at least a partial disablement of the telephone 2. This disablement may be achieved in a number of different ways. However, when the controller is in an inactive mode it does not respond to activation of the sensor. The user can select whether the controller 10 is in the active or inactive mode.

According to a preferred embodiment, the controller 10 controls the radio transceiver 12 to send a disabling message which will substantially prevent the telephone 2 being used as a normal telephone, The telephone 2 may be completely prevented from operating in the cellular network or it may for example, be capable of only performing a very limited number of functions for example making emergency calls only, or calling only a network operator call centre.

Figure 3 illustrates a GSM cellular network 40 comprising a plurality of cells 42 each with a base station 44. The mobile telephone 2 communicates in the network by transmitting to and receiving from the serving base station 44 of the cell 42 in which it is located. As the mobile station moves from ,one cell to another the serving base station 44 changes. The base stations 44 are controlled by a mobile switching centre (MSC) 46. The MSC 46 controls the routing of communications from sender to receiver. The MSC 46 is connected to the Home Location Register (HLR) 48. This is a central database storing all the information that allows a user to access and use the network 40. The HLR 48 stores the International Mobile Subscriber Identity (IMSI) for each user of the network 40 and a restriction class for each user which indicates whether a user is able to transmit and receive communications and the type of communications that are possible. The network 40 may also have an Equipment Identity Register (EIR) 50 connected to the MSC 46. The EIR 50 is a database which tracks handsets. The EIR, if present, may blacklist a stolen handset via its International Mobile Equipment Identity (IMEI) thereby preventing its use in the network 40.

In response to activation of the sensor 22, the controller 10 controls the radio transceiver 12 to send a disabling SMS message which will substantially prevent the telephone 2 being used as a normal telephone. The message may be sent immediately, or when the phone is next activated. The phone may self-activate in response to activation of the sensor. The message sent to the network may include the International mobile subscriber identity (IMSI) stored in the SIM 6 and the International mobile equipment identity (IMEI) stored in the handset 2. The IMSI uniquely identifies the user in the network and the IMEI uniquely identifies the handset. Alternatively, if the telephone is already participating in the network and has a temporary mobile subscriber identity (TMSI), the message may include the TMSI. The network is therefore capable, having received the message, of uniquely identifying the handset 4 and the SIM card 6 either directly from the IMEI and IMSI or indirectly via the TMSI. The network is then able to change the restriction class in the HLR 48 for that IMSI and is capable of registering the handset having that IMEI as stolen in the EIR 40. Thus the handset will not be capable of being used, except possibly to make emergency calls to 911/999 or calls to the network operator call centre and the SIM card will not be capable of being used in another telephone. Preferably, the disabled telephone can be re-enabled by the network operator, after receiving a password during a call, possibly placed using the partially disabled telephone, to the network operator call centre.

According to another embodiment of the invention, the controller 10 responds to the sensor 22 sensing that the connector 24 has been released, by locking the handset 4 to the particular SIM card 6 which is connected to it at that time. This locking procedure is described in the SIM personalisation procedure described in GSM 02.22 and in EP-B-0301740. The controller 10 may also control the radio transmitter 12 to send a disabling SMS message to the network 40. This disabling message may be the same and operate in the same manner as described in the preceding paragraph. Alternatively, if the EIR 50 is not present in the network 40, the message may change the restriction class in the HLR 48 for that IMSI. The locking procedure may be reversed by entering a secret PIN code to the telephone or remotely by the network operator after receiving a password. The effect of the disable message may be reversed by the network operator after receiving a password as described in the preceding paragraph.

Although the preceding paragraphs have described an embodiment of the invention with reference to a GSM cellular communication network and a GSM compliant mobile telephone, it should be appreciated that the invention has application in other cellular communication networks and telephones, and in other appliances with radio transmitters. It should therefore be appreciated that modifications and variations to the examples given can be made without departing from the scope of the invention as claimed.

## Claims

1. A portable device (2), comprising:
a releasable connector (24) arranged to connect the portable device (2) to a person and arranged to release the connection of the portable device (2) to the person if the device is grabbed while connected to the person; and
control means (10) arranged to effect at least partial disablement of the portable device (2) in response to the release of the releasable connector (24).

2. A portable device (2) as claimed in claim 1, wherein the releasable connector (24) comprises a strap (26).

3. A portable device (2) as claimed in claim 1 or 2, wherein the releasable connector (24) is released by severance.

4. A portable device (2) as claimed in any of claims 1 to 3, further comprising unauthorized separation detection means (22) for detecting the release of the releasable connector (24) from the portable device (2).

5. A portable device (2) as claimed in claim 4, wherein the unauthorized separation detection means (22) detects the interruption of a closed conductive path via the releasable connector (24).

6. A portable device (2) as claimed in any of the preceding claims, further comprising a radio transmitter (12), wherein the control means (10) is arranged to control the radio transmitter (12) to send a message in response to the release of the releasable connector (24).

7. A portable device (2) as claimed in any of the preceding claims, wherein the portable device (2) comprises a cellular radio transceiver (12).

8. A portable device (2) as claimed in claim 7, wherein the control means (10) is arranged to effect at least partial disablement of the portable device (2) by controlling the cellular radio transceiver (12) to transmit a disable message.

9. A portable device (2) as claimed in any of the preceding claims, wherein the portable device (2) is or comprises a cellular mobile telephone (2), having a radio transmitter (12), for operation in a cellular communications network (40) and the control means (10) is arranged to control the radio transmitter (12) to send a disabling message to the network (40) for disabling normal operation of the telephone (2) in the network (40).

10. A cellular telephone network (40) comprising a portable device (2) as claimed in claim 9 wherein the mobile telephone (2) comprises a handset (4) and a replaceable card (6), which enables the handset (4) to operate as a telephone (2) in the network (40), and the network (40) is responsive to the disabling message sent by the mobile telephone (2) to disable the card (6) from normal use in the network (40) and/or to disable the handset (4) from normal use in the network (40).

## Patentansprüche

1. Tragbare Vorrichtung (2), umfassend :
eine lösbare Verbindungseinrichtung (24), die eingerichtet ist, die tragbare Vorrichtung (2) mit einer Person zu verbinden und eingerichtet ist, die Verbindung der tragbaren Vorrichtung (2) mit der Person zu lösen, wenn die Vorrichtung ergriffen wird, während sie mit der Person verbunden ist; und
Steuermittel (10), die eingerichtet sind, mindestens eine teilweise Deaktivierung der tragbaren Vorrichtung (2) zu bewirken in Reaktion auf das Lösen der lösbaren Verbindungseinrichtung (24).

2. Tragbare Vorrichtung (2) nach Anspruch 1, wobei die lösbare Verbindungseinrichtung (24) einen Riemen (26) umfasst.

3. Tragbare Vorrichtung (2) nach Anspruch 1 oder 2, wobei die lösbare Verbindungsvorrichtung (24) durch Trennung gelöst wird.

4. Tragbare Vorrichtung (2) nach einem der Ansprüche 1 bis 3, weiter umfassend ein Erfassungsmittel für unauthorisierte Trennung (22) zum Erfassen des Lösens der lösbaren Verbindungseinrichtung (24) von der tragbaren Vorrichtung (2).

5. Tragbare Vorrichtung (2) nach Anspruch 4, wobei das Erfassungsmittel für unauthorisierte Trennung (22) die Unterbrechung eines geschlossenen leitenden Pfads über die lösbare Verbindungseinrichtung (24) erfasst.

6. Tragbare Vorrichtung (2) nach einem der vorhergehenden Ansprüche, weiter umfassend einen Funksender (12), wobei das Steuermittel (10) eingerichtet ist, den Funksender (12) zu steuern, in Reaktion auf das Lösen der lösbaren Verbindungseinrichtung (24) eine Nachricht zu senden.

7. Tragbare Vorrichtung (2) nach einem der vorhergehenden Ansprüche, wobei die tragbare Vorrichtung (2) einen zellularen Funk-Sende-Empfänger (12) umfasst.

8. Tragbare Vorrichtung (2) nach Anspruch 7, wobei das Steuermittel (10) eingerichtet ist, zumindest eine teilweise Deaktivierung der tragbaren Vorrichtung (2) zu bewirken, durch Steuern des zellularen Funk-Sende-Empfängers (12) so, dass er eine Deaktivierungsnachricht sendet.

9. Tragbare Vorrichtung (2) nach einem der vorhergehenden Ansprüche, wobei die tragbare Vorrichtung (2) ein zellulares Mobiltelefon (2) umfasst oder ist, welches einen Funksender (12) aufweist, zum Betrieb in einem zellularen Kommunikationsnetz (40), und das Steuermittel (10) eingerichtet ist, den Funksender (12) so zu steuern, dass er eine Deaktivierungsnachricht an das Netz (40) sendet, um den normalen Betrieb des Telefons (2) in dem Netz (40) zu deaktivieren.

10. Zellulares Telefonnetz (40), umfassend eine tragbare Vorrichtung (2) nach Anspruch 9, wobei das Mobiltelefon (2) ein Handteil (4) und eine austauschbare Karte (6) aufweist, welche es dem Handteil (4) gestattet, als ein Telefon (2) in dem Netz (40) zu arbeiten, und wobei das Netz (40) auf die von dem Mobiltelefon (2) gesendete Deaktivierungsnachricht so reagiert, dass es die Karte (6) bezüglich des normalen Gebrauchs im Netz (40) deaktiviert und/oder das Handteil (4) bezüglich des normalen Gebrauchs im Netz (40) deaktiviert.

## Revendications

1. Dispositif portatif (2), comprenant:
un connecteur détachable (4) agencé pour connecter le dispositif portatif (2) à une personne et agencé pour détacher la connexion du dispositif portatif (2) à la personne si le dispositif est saisi alors qu'il est connecté à la personne; et
un moyen de commande (10) agencé pour effectuer une désactivation au moins partielle du dispositif portatif (2) en réponse au détachement du connecteur détachable (24).

2. Dispositif portatif (2) comme revendiqué dans la revendication 1, dans lequel le connecteur détachable (24) comprend une sangle (26).

3. Dispositif portatif (2) comme revendiqué dans la revendication 1 ou 2, dans lequel le connecteur détachable (24) est détaché par séparation.

4. Dispositif portatif (2) comme revendiqué dans l'une quelconque des revendications 1 à 3, comprenant par ailleurs un moyen de détection de séparation non autorisée (22) pour détecter le détachement du connecteur détachable (24) du dispositif portatif (2).

5. Dispositif portatif (2) comme revendiqué dans la revendication 4, dans lequel le moyen de détection de séparation non autorisée (22) détecte l'interruption d'un chemin conducteur fermé à travers le connecteur détachable (24).

6. Dispositif portatif (2) comme revendiqué dans l'une quelconque des revendications précédentes, comprenant par ailleurs un émetteur radio (12), dans lequel le moyen de commande (10) est agencé pour commander l'émetteur radio (12) pour envoyer un message en réponse au détachement du connecteur détachable (24).

7. Dispositif portatif (2) comme revendiqué dans l'une quelconque des revendications précédentes, dans lequel le dispositif portatif (2) comprend un émetteur-récepteur radio cellulaire (12).

8. Dispositif portatif (2) comme revendiqué dans la revendication 7, dans lequel le moyen de commande (10) est agencé pour effectuer une désactivation au moins partielle du dispositif portatif (2) en commandant l'émetteur-récepteur radio cellulaire (12) pour transmettre un message de désactivation.

9. Dispositif portatif (2) comme revendiqué dans l'une quelconque des revendications précédentes, dans lequel le dispositif portatif (2) est ou comprend un téléphone mobile cellulaire (2), ayant un émetteur radio (12), pour fonctionnement dans un réseau de communications cellulaires (40) et le moyen de commande (10) est agencé pour commander l'émetteur radio (12) pour envoyer un message de désactivation au réseau (40) pour désactiver le fonctionnement normal du téléphone (2) dans le réseau (40).

10. Réseau téléphonique cellulaire (40) comprenant un dispositif portatif (2) comme revendiqué dans la revendication 9 dans lequel le téléphone mobile (2) comprend un combiné (4) et une carte remplaçable (6), qui permet au combiné (4) de fonctionner comme un téléphone (2) dans le réseau (40), et le réseau (40) est sensible au message de désactivation envoyé par le téléphone mobile (2) pour désactiver le fonctionnement normal de la carte (6) dans le réseau (40) et/ou pour désactiver le fonctionnement normal du combiné (4) dans le réseau (40).
